# EUROPEAN PATENT APPLICATION

(11) **EP 0 994 133 A2**
(43) Date of publication of application: **19.04.2000**
(21) Application number: 99308092.8
(22) Date of filing: 13.10.1999
(51) Int. Cl.: C08F 220/54

(54) **Method for raising cloud point polymer**

(30) Priority: 13.10.1998 JP 29060398
(71) Applicant: Nippon Shokubai Co., Ltd., Osaka-shi, Osaka 541-0043 (JP)
(72) Inventor: Namba, Takashi, Toride-shi, Ibaraki 302-0015 (JP)
(74) Representative: Rees, David Christopher

(57) **Abstract**

A method for raising the cloud point of a polymer containing a monomer whose homopolymer possesses a cloud point while controlling the molecular weight thereof and using a copolymerizing monomer at a small application rate is provided. The method attains the raising of the cloud point of the polymer by copolymerizing (A) a monomer whose homopolymer possesses a cloud point and (B) other monomer, (B) the other monomer contains (b) a monomer possessing a dissociatable group, and the copolymerization of (A) the monomer and (B) the other monomer being effected in the presence of a mercaptan and/or a sulfide possessing in the molecular unit thereof a dissociatable group possessing the same electric charge as the dissociatable group of (b) the monomer.

## Description

This invention relates to a method for raising cloud point of a polymer containing a monomer whose homopolymer possesses a cloud point. More particularly, it relates to a method for raising cloud point of a polymer by copolymerizing a monomer whose homopolymer possesses a cloud point with other monomer.

The water-soluble monomers having the molecules thereof substituted with a hydrophobic group which are represented by such vinyl amides as N-vinyl caprolactam and such N-substituted (meth)acrylamides as N-isopropyl acrylamide and N,N-diethyl acrylamide are such that the polymers thereof possess a critical temperature above which the polymers become insoluble in water (lowest critical solution temperature, otherwise referred to as LCST or cloud point). They are expected to find utility in applications such as medical care, medicinal chemistry, and agricultural pesticides which can take advantage of this critical temperature.

The cloud point can be controlled to a level above or below the cloud point of the homopolymer of the aforementioned water-soluble monomer by copolymerizing the water-soluble monomer with a hydrophilic monomer or a hydrophobic monomer. An attempt to obtain a copolymer having a high cloud point, however, requires a hydrophilic monomer to be used in a large amount in the relevant copolymerization and consequently entails a decrease in the content of a hydrophilic monomer in the produced copolymer, with the result that the function such as, for example, the adsorbing ability originating in the aforementioned water-soluble monomer and expected of the produced polymer will degrade markedly and will possibly fail to manifest.

Incidentally, the method for controlling the molecular weight and the molecular weight distribution of the polymer of an ethylenically unsaturated monomer as by the use of a mercaptan compound has been known to the public as disclosed in US-A-5,574,117, for example. This method can be applied to polymerization of the aforementioned water-soluble monomer. In most cases, the mercaptan compound to be used for this method is an alkyl mercaptan. Further, since it is the long-chain alkyl mercaptan of strong hydrophobicity represented by octyl mercaptan on account of the problem of odor, the method encounters the problem that the effect of the improvement of the cloud point by the copolymerization of a hydrophilic monomer is greatly restrained. For the purpose of solving this problem, we have pursued a diligent study in search of a method for raising the cloud point of the polymer containing a monomer whose homopolymer possesses a cloud point above the cloud point of the homopolymer by copolymerizing the monomer with other monomer component. We have consequently found that the aforementioned copolymerization, when performed in the presence of a mercaptan and/or a sulfide possessing in the molecular unit thereof at least one dissociatable group having the same electric charge as the dissociatable group possessed by a copolymerizing monomer, allows production of a polymer possessing a higher cloud point and a controlled molecular weight at a smaller application rate of the copolymerizing monomer than when the use of the mercaptan and/or sulfide is omitted. This invention has been perfected as a result.

An object of this invention, therefore, is to provide a method for efficiently raising the cloud point of a polymer containing a monomer whose homopolymer possesses a cloud point while controlling the molecular weight of the polymer and, at the same time, lowering the application rate of a copolymerizing monomer.

The object mentioned above is accomplished by a method for raising the cloud point of a polymer by copolymerizing (A) a monomer whose homopolymer possesses a cloud point and (B) other monomer, (B) the other monomer containing (b) a monomer possessing a dissociatable group and the copolymerization of (A) the monomer and (B) the other monomer component being carried out in the presence of a mercaptan and/or a sulfide possessing in the molecular unit thereof a dissociatable group having the same electric charge as the dissociatable group of (b) the monomer.

According to this invention, the cloud point of a polymer can be efficiently improved in a very wide range by using a copolymerizing monomer at a small application rate and allowing the produced polymer to acquire a controlled molecular weight. For example, the polymer having a cloud point of not less than 35°C in synthetic sea water can be obtained. Further, owing to the use of a mercaptan and/or a sulfide which possesses a dissociatable group, the method of this invention is characterized by allowing the produced polymer to emit only weak odor as compared with the production using an alkyl mercaptan. The polymer to be obtained by the method of this invention for the improvement of the cloud point, therefore, is highly useful in the fields of medicines, agricultural pesticides, water treating agents, coating materials, thickeners, etc.

The monomer (A) mentioned above is particularly effective in the form of an N-substituted (meth)acrylamide represented by the following general formula (1): 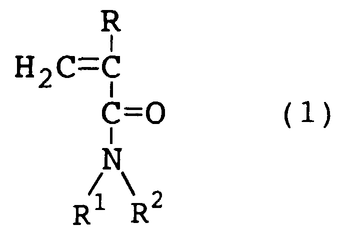 (wherein R represents a hydrogen atom, an alkyl group of 1 - 4 carbon atoms, or a hydroxyalkyl group of 1 - 4 carbon atoms, R¹ and R² represent, either identically or not identically, a hydrogen atom or an organic residue of 1 - 8 carbon atoms, providing that they do not both represent a hydrogen atom and that R¹ and R² may be linked to each other directly or through the medium of at least one element selected from the group consisting of oxygen, nitrogen, and sulfur.

As typical examples of (A) the monomer whose homopolymer possesses a cloud point, vinyl amides such as N-vinyl caprolactam and N-substituted (meth)acrylamides such as N-methyl (meth)acrylamide, N,N-dimethyl (meth)acrylamide, N-ethyl (meth)acrylamide, N,N-diethyl (meth)acrylamide, N-n-propyl (meth)acrylamide, N-isopropyl (meth)acrylamide, N-cyclopentyl (meth)acrylamide, N-cyclohexyl (meth)acrylamide, (meth)-acroyl pyrrolidine, (meth)acryloyl piperazine, and (meth)acryloyl morpholine may be cited.

In (b) the monomer included in (B) the other monomer in this invention and possessing a dissociatable group, as typical examples of the monomer possessing an anionic dissociatable group, carboxyl group-containing monomers such as (meth)acrylic acid, maleic acid, and fumaric acid, salts thereof, and anhydrides thereof; and sulfonic acid group-containing monomers such as 2-acrylamide-2-methylpropane sulfonic acid, vinyl sulfonic acid, styrene sulfonic acid, and hydroxyallyloxy propane sulfonic acid and salts thereof may be cited. As typical examples of the monomer possessing a cationic dissociatable group, dialkyl amino alkyl(meth)acrylates such as dimethyl amino ethyl (meth)acrylate, diethyl amino ethyl (meth)acrylate, and dimethyl amino propyl (meth)acrylate, dialkyl amino alkyl (meth)acrylamides such as dimethyl amino ethyl (meth)acrylamide, diethyl amino ethyl (meth)acrylamide, and dimethyl amino propyl (meth)acrylamide, amino group-containing monomers such as allyl amine, and neutralized salts thereof may be cited. The monomers mentioned above may be used either singly or in the form of a mixture of two or more members.

As typical examples of the mercaptan and/or sulfide to be used in copolymerizing the monomer possessing an anionic dissociatable group, mercapto acetic acid, mercapto propionic acid, thiosalicylic acid, mercapto benzoic acid, mercapto succinic acid, mercapto ethane sulfonic acid, and neutralized salts thereof may be cited. The compounds mentioned above may be used either singly or in the form of a mixture of two or more members.

When (b) the monomer is a monomer possessing an anionic dissociatable group, the mercaptan and/or sulfide is preferred to be at least one compound selected from the group consisting of mercapto acetic acid, mercapto propionic acid, and neutralized salts thereof.

As typical examples of the mercaptan and/or sulfide to be used in copolymerizing a monomer possessing a cationic dissociatable group, mercaptans such as cysteamine and cysteine; and disulfides such as cystamine and cystine and inorganic acid salts thereof such as hydrochlorides, sulfates, and phosphate, and organic acid salts thereof such as acetates, octylates, laurates, and stearates may be cited. These compounds may be used either singly or in the form of a mixture of two or more members.

When (b) the monomer possesses a cationic dissociatable group, the mercaptan and/or sulfide mentioned above is preferred to be at least one compound selected from the group consisting of mercaptans such as cysteamine and cysteine; and disulfides such as cystamine and cystine and neutralized salts thereof.

As typical examples of the monomer which may be contained other than (b) the monomer of (B) the othermonomer, unsaturated hydrocarbons such as ethylene, propylene, butene, and styrene; (meth)acrylic esters such as methyl (meth)acrylate, ethyl (meth)acrylate, n-propyl (meth)acrylate, isopropyl (meth)-acrylate, n-butyl (meth)acrylate, 2-ethylhexyl (meth)acrylate, lauryl (meth)acrylate, stearyl (meth)acrylate, and cyclohexyl (meth)acrylate; (meth)acrylamide; vinyl ethers such as methyl vinyl ether, ethyl vinyl ether, and butyl vinyl ether; vinyl acetate; N-vinyl lactam compounds such as N-vinyl-2-pyrrolidinone and N-vinyl-caprolactam; oxazolidone ring-containing compounds such as N-vinyl oxazolidone and N-vinyl-5-methyl oxazolidone; oxazoline ring-containing compounds such as isopropenyl oxazoline; and fused hetero ring-containing compounds such as N-vinyl carbazole may be cited. These compounds may be used either singly or in the form of a mixture of two or more members.

The amount of a mercaptan and/or a sulfide to be used in this invention is preferred to be such that the molar ratio of [(A) the monomer and (B) the other monomer] : (mercaptan and/or sulfide) is in the range of 1000 : 1 - 5 : 1, preferably in the range of 500 : 1 - 10 : 1. If the amount of mercaptan and/or sulfide is smaller than 1000 : 1, the control of the molecular weight becomes difficult, or the expected effect of improving the cloud point will not be obtained because the ratio of molecules growing exclusively by the ordinary radical polymerization is markedly increased, and the ratio of molecules possessing segments originating in the mercaptan and/or sulfide in the molecular chain terminal becomes small or a polymer having two kinds of molecular weight distribution of a polymer of a low molecular weight and a polymer of a high molecular weight will possibly be obtained because the mercaptan and/or the sulfide is consumed substantially wholly during the course of the reaction. Conversely, if the amount is larger than 5 : 1, the excess will bring the disadvantage that the polymer is not obtained at all or, if the polymer is obtained, the unreacted monomer remains in a large amount.

The amount of (B) the other monomer is in the range of 1 - 50 mol%, preferably 5 - 25 mol%, based on the total amount of (A) the monomer and (B) the other monomer. The proportion of (b) the monomer possessing a dissociatable group in (B) the other monomer is in the range of 10 - 100 mol%, preferably 50 - 100 mol%.

The copolymerization of the monomer composition of this invention can be implemented through the aid of heat, a polymerization initiator, or radiation. As typical examples of the polymerization initiator, peroxides such as hydrogen peroxide, methylethyl ketone peroxide, cyclohexanone peroxide, 1,1,-bis(t-butylperoxy) 3,3,5-trimethyl cyclohexane, t-butyl hydroperoxide, di-t-butyl peroxide, dicumyl peroxide, benzoyl peroxide, acetyl peroxide, t-butyl peroxyacetate, t-butyl peroxy-2-ethylhexanoate, di-t-butyl peroxyisophthalate, and t-butylperoxy maleic acid, azo compounds such as azobisisobutyronitrile, 1,1'-azobis(cyclohexane-2-carbonitrile) 1-[(1-cyano-1-methylethyl)azo] formamide, 2-phenylazo-4-methoxy-2,4-dimethyl-valeronitrile, and 2,2'-azobis(2,4,4-trimethyl pentane), and persulfates such as sodium persulfate and ammonium persulfate may be cited. These polymerization initiators may be used either singly or in the form of a mixture of two or more members. It is also permissible to use redox type initiators formed between oxidizing agents such as persulfates and peroxides and reducing agents such as sodium sulfite, L-ascorbic acid, ferrous chloride, and rongalit. It is further permissible to use heat, radiation such as ultraviolet light, and electron beam, and a polymerization initiator in combination.

When the polymerization initiator is used in this invention, the amount of the initiator is preferred to be in the range of 0.001 - 5 % by weight, particularly 0.01 - 2 % by weight, based on the total amount of the monomers. If this amount is less than 0.001 % by weight, the polymerization will possibly fail to proceed at all. In contrast, if the amount exceeds 5 % by weight, the excess will bring the disadvantage that the reaction proceeds violently, the temperature control of the reaction system becomes difficult, the ratio of molecules grown solely by the ordinary radical polymerization markedly increases, and the proportion of molecules possessing a mercaptan and/or a sulfide at the molecular chain terminal decreases.

The polymerization of the monomer composition of this invention can be implemented without using a solvent or by the use of a solvent. The solvent to be used does not need to be particularly restricted but is only required to dissolve the monomer composition, mercaptan, sulfide, polymerization initiator etc. As typical examples of the solvent, water; aqueous solutions such as salt solution and sea water; aliphatic hydrocarbons such as hexane, heptane, and octane; alicyclic hydrocarbons such as cyclohexane; aromatic hydrocarbons such as benzene, toluene and xylene; alcohols such as methanol, ethanol, 2-propanol, and butanol; polyhydric alcohols such as ethylene glycol, propylene glycol, 1,4-butanediol, and glycerol; alkoxy alkylene glycols such as methoxyethylene glycol, butoxy ethylene glycol, and methoxy propylene glycol; ethers such as diethyl ether; cyclic ethers such as dioxane; esters such as butyl acetate; ketones such as diethyl ketone, methylethyl ketone, and methylisobutyl ketone; sulfoxides such as dimethyl sulfoxide; amides such as dimethyl formamide; lactams such as 2-methyl pyrrolidone; and halogen-containing organic solvents such as chloroform, dichloromethane, and dichloroethane may be cited. These solvents may be used either singly or in the form of a mixture of two or more members.

The concentration of the monomer composition is only required to fall in the range in which the reaction temperature can be controlled and the polymer is economically obtained. Specifically, it is in the range of 5 - 100 % by weight, preferably in the range of 25 - 80 % by weight.

Further, the reaction temperature is only required to fall in the range in which the reaction temperature can be controlled and the polymer is efficiently obtained. Specifically, it is in the range of -10° - 150°C, preferably 40° - 100°C. When the polymerization solvent selected happens to be a water-containing solvent, the polymer formed at a polymerization temperature exceeding the cloud point possibly separates in lumps and prevents the system from being easily stirred or allowed to release heat because the produced copolymer possesses a cloud point. It is, therefore, favorable to control the polymerization temperature below the cloud point of the produced polymer. Even when the polymerization temperature exceeds the cloud point, the polymer may be prevented from separating in lumps by adding a dispersant, for example, to the reaction system.

Particularly when N-substituted (meth)acrylamide is used, the solubility thereof in water possibly manifests the maximum value at a certain temperature and further the formed copolymer possesses a cloud point. When the aqueous solvent is selected as the reaction solvent, therefore, it is commendable to maintain both the polymerization concentration and the polymerization temperature at such levels that the monomer composition containing the N-substituted (meth)acrylamide and the polymer may be retained in a dissolved state during the course of the reaction.

When a cationic N,N-dialkyl aminoalkyl (meth)acrylate, N,N-dialkylaminoalkyl (meth)acrylamide, or allylamine is selected as (b) the aforementioned monomer possessing the dissociatable group, the method of polymerization preferably uses neutralized salts or quaternized salts of such a cationic monomer and a mercaptan and/or a sulfide and adopts a water-containing solvent as the polymerization solvent. When the polymerization is carried out in an organic solvent containing no water, use of a mercaptan and/or a sulfide in a large amount is possibly required for the purpose of obtaining a polymer possessing an expected molecular weight. The use of water as the polymerization solvent, the selection of the polymerization concentration in the range of 5 -80%, preferably 25 - 70%, and the adoption of the redox type initiator capable of initiating the polymerization at a low temperature as the polymerization initiator prove particularly preferable because they allow very easy release of heat from the system and permit the reaction to proceed in a stroke without requiring the monomer solution to be split or added dropwise continuously.

When one member or a mixture of two or more members selected from among maleic acid, fumaric acid, 2-acrylamide-2-methyl propane sulfonic acid, vinyl sulfonic acid, styrene sulfonic acid, allyl sulfonic acid, 3-hydroxy-3-allyloxy propane sulfonic acid, and maleic anhydride is used as (b) the monomer possessing the dissociatable group mentioned above, it is permissible to select either the aqueous solvent or the organic solvent, whichever fits the occasion better. For the sake of controlling the temperature during the polymerization, it is preferred to add the solution of the monomer composition as split or continuously dropwise. In this case, the mercaptan and/or the sulfide may be wholly placed in advance in the reaction vessel or it may be added as split or continuously dropwise in the same manner as the solution of the monomer composition.

When (meth)acrylic acid is selected as (b) the monomer possessing the dissociatable group mentioned above, it is preferable to add the mercaptan and/or the sulfide as split or continuously dropwise. The speed of consumption of mercaptan and/or sulfide is very high. When the mercaptan and/or the sulfide is added wholly at once, therefore, the control of the molecular weight becomes very difficult because the mercaptan and/or the sulfide is consumed practically wholly during the initial stage of the reaction of polymerization and a high molecular weight substance is copiously formed in the latter stage of the reaction.

The number average molecular weight of the copolymer of this invention which is obtained by selecting the conditions mentioned above can be controlled generally in the range of 200 - 500,000, preferably in the range of 300 - 250,000, and more preferably in the range of 500 - 100,000.

Now, this invention will be described more specifically below with reference to working examples. This invention is not limited to these working examples.

### <Method for determining molecular weight and molecular weight distribution>

The molecular weight of a given polymer is measured by the size exclusion chromatograph using as an eluent dimethyl formamide in which lithium bromide is dissolved in a concentration of 30 m.mols/liter and obtained as a reduced molecular weight using polystyrene as the standard substance.

### <Method for determination of cloud point>

The cloud point of a given polymer is determined by placing 5 ml of an aqueous 0.5 wt. % polymer solution or an synthetic sea water solution ("Aquamarine" manufactured by Yashima Pure Chemical Co., Ltd.) in 10 ml of a test tube, setting this test tube in a water bath, elevating the temperature of the water bath from 30°C at a speed of 1°C per minute to 92°C, and visually confirming the temperature at which the cloud is confirmed first and reporting this temperature as the cloud point.

### Example 1

In a four-necked flask having an inner volume of 500 ml and provided with a stirrer, a condenser, a thermometer, and a nitrogen inlet tube, 35.15 g of N-isopropyl acrylamide (made by Kojin Co., Ltd,), 32.83 g of an aqueous 30 wt. % N,N-dimethyl aminoethyl acrylate hydrochloride solution, 4.68 g of an aqueous 75 wt. % cysteamine hydrochloride solution, and 232.02 g of deionized water were placed. Then, with the leading terminal of the nitrogen inlet tube submerged in the solution, nitrogen was bubbled through the solution at a flow volume of 0.5 liter/minute for 30 minutes to expel the dissolved oxygen from the solution. Thereafter, the leading terminal of the nitrogen inlet tube was pulled up from the liquid level.

Then, the flask was immersed in a water bath at 31°C to maintain the temperature of the solution in the flask to 30°C. At the time at which the temperature of the solution was stabilized at 30°C, 0.2 g of an aqueous 10% sodium persulfate solution was added to the solution in the flask in a stirred state. After the elapse of 30 seconds thence, 0.2 g of an aqueous 1 wt. % 2,2-azobis(2,4-dimethyl valeronitrile) (made by Wako Pure Chemical Industries Co., Ltd. and sold under the product code of "V-65") was added. After the further elapse of 30 seconds thence, 0.2 g of an aqueous 1 wt. % L-ascorbic acid solution was added thereto.

The evolution of heat in consequence of a reaction of polymerization was observed to start after 2 minutes following the addition of the aqueous L-ascorbic acid solution. The peak of polymerization (36°C) arrived after the further elapse of 10 minutes thence. Thereafter, the temperature of the water bath was elevated to 42°C and the reaction was allowed to continue at this temperature for 2 hours.

A polymer (1) was obtained by placing part of the produced aqueous solution in a cup made of aluminum and dried under a reduced pressure at 100°C under 15 mmHg for 5 hours.

The number average and the weight average molecular weights of the produced polymer (1) and the cloud points of 0.5 wt.% ion deionized water and the synthetic sea water solution of the polymer are shown in Table 1.

### Example 2

A monomer solution was prepared by dissolving 4313 g of N-isopropyl acrylamide (made by Kojin Co., Ltd,) and 687 g of acrylic acid in 5000 g of isopropyl alcohol.

In a reaction vessel of SUS 304 having an inner volume of 20 liters and provided with a stirrer, a condenser, a thermometer, and a nitrogen inlet tube, 3000 g of the aforementioned monomer solution and 48 g of mercapto propionic acid were placed. Then, with the leading terminal of the nitrogen inlet tube submerged in the solution, nitrogen was bubbled through the solution at a flow volume of 2 liters/minute for 60 minutes to expel the dissolved oxygen from the solution. Thereafter, the leading terminal of the nitrogen inlet tube was pulled out from the liquid level.

Then, the reaction vessel was immersed in an oil bath at 90°C and heated therein. At the time that the isopropyl alcohol began refluxing, the remainder of the monomer solution was added dropwise over a period of 90 minutes. At the same time that the dropwise addition of the monomer solution was started, the dropwise addition 375 g of an isopropyl alcohol 1 wt. % solution of an azo type polymerization initiator V-40 (made by Wako Pure Chemical Industries Co., Ltd.) and 271 g of mercapto propionic acid was started. This dropwise addition was continued for 180 minutes.

Thereafter, the heating was continued for 4 hours to complete the reaction.

A polymer (2-1) was obtained by placing part of the produced reaction solution in a cup of aluminum and dried under a reduced pressure at 100°C under 15 mmHg for five hours.

The number average and the weight average molecular weights of the produced polymer (2-1) and the cloud points of 0.5 wt.% ion deionized water and the synthetic seawater solution of the polymer are shown in Table 1.

A polymer (2-2) was obtained by dissolving part of the solid obtained by drying the produced reaction solution in deionized water in an amount calculated to account for a solid concentration of 50%, neutralizing the resultant solution with an aqueous 1N sodium hydroxide solution, and drying the solution under a reduced pressure at 100°C under 15 mmHg for five hours.

The number average and the weight average molecular weights of the produced polymer (2-2) and the cloud points of 0.5 wt.% ion deionized water and the synthetic sea water solution of the polymer are shown in Table 1.

### Example 3

In a four-necked flask having an inner volume of 500 ml and provided with a stirrer, a condenser, a thermometer, and a nitrogen inlet tube, 124.64 g of N-isopropyl acrylamide (made by Kojin Co., Ltd,), 25.36 g of 2-acrylamide-2-methyl propane sulfonic acid (made by Lubrizal Japan Ltd.), 11.94 g of mercapto propionic acid, 75.00 g of deionized water, and 75.00 g of isopropyl alcohol were placed. Then, with the leading terminal of the nitrogen inlet tube submerged in the solution, nitrogen was bubbled through the solution at a flow volume of 0.5 liter/minute for 30 minutes to expel the dissolved oxygen from the system. Thereafter, the leading terminal of the nitrogen inlet tube was pulled up from the liquid level.

Then, the flask was immersed in an oil bath at 62°C to maintain the temperature of the solution in the flask to 60°C. At the time that the temperature of the solution was stabilized at 60°C, 3.5 g of an isopropyl alcohol 2% solution of V-40 was added in a stirred state as a polymerization initiator.

The evolution of heat in consequence of a reaction of polymerization was observed to start after 5 minutes following the addition of the initiator and the reflux of the solvent started about five minutes thereafter. Thereafter, the temperature of the oil bath was elevated to 90°C and the heating was continued for 4 hours to complete the reaction.

A polymer (3-1) was obtained by placing part of the produced reaction solution in a cup of aluminum and dried under a reduced pressure at 100°C under 15 mmHg for 5hours.

The number average and the weight average molecular weights of the produced polymer (3-1) and the cloud points of 0.5 wt.% ion deionized water and the synthetic sea water solution of the polymer are shown in Table 1.

A polymer (3-2) was obtained by dissolving part of the solid obtained by drying the produced reaction solution in deionized water in an amount calculated to account for a solid concentration of 50%, neutralizing the resultant solution with an aqueous 1N sodium hydroxide solution, and drying the solution under a reduced pressure at 100°C under 15 mmHg for 5 hours.

The number average and the weight average molecular weights of the produced polymer (3-2) and the cloud points of 0.5 wt.% ion deionized water and the synthetic sea water solution of the polymer are shown in Table 1.

### Control 1

In a four-necked flask having an inner volume of 500 ml and provided with a stirrer, a condenser, a thermometer, and a nitrogen inlet tube, 38.82 g of N-isopropyl acrylamide (made by Kojin Co., Ltd,), 6.18 g of acrylic acid, 4.51 g of an aqueous 75 wt. % cysteamine hydrochloride solution, and 255.00 g of deionized water were placed. Then, with the leading terminal of the nitrogen inlet tube submerged in the solution, nitrogen was bubbled through the solution at a flow volume of 0.5 liter/minute for 30 minutes to expel the dissolved oxygen from the system. Thereafter, the leading terminal of the nitrogen inlet tube was pulled up from the liquid level.

Then, the flask was immersed in a water bath at 31°C to maintain the temperature of the solution in the flask to 30°C. At the time that the temperature of the solution was stabilized at 30°C, 0.2 g of an aqueous 10% sodium persulfate solution was added in a stirred state as a polymerization initiator. After the elapse of 30 seconds thence, 0.2 g of an aqueous 10 wt. % 2,2-azobis(2,4-dimethyl valeronitrile) (made by Wako Pure Chemical Industries Co., Ltd. and sold under the product code of V-65") solution was added and after the further elapse of 30 seconds thence 0.2 g of an aqueous 1 wt. % L-ascorbic acid solution was added thereto.

Immediately after the addition of the aqueous L-ascorbic acid solution, the reaction solution was opacified. The evolution of heat in consequence of a reaction of polymerization was observed to start after the elapse of 30 seconds thence. The peak of polymerization (36°C) arrived after the further elapse of 8 minutes thence. In the meanwhile, the turbidity of the reaction solution gradually intensified. Thereafter, the temperature of the water bath was elevated to 42°C and the reaction was continued at this temperature for 2 hours.

A polymer for comparison (Comparison 1-1) was obtained by placing part of the produced reaction solution in a cup of aluminum and dried under a reduced pressure at 100°C under 15 mmHg for 5 hours.

The number average and the weight average molecular weights of the produced polymer for comparison (Comparison 1-1) and the cloud points of 0.5 wt.% ion deionized water and the synthetic sea water solution of the polymer are shown in Table 1.

A polymer for comparison (Comparison 1-2) was obtained by dissolving part of the solid obtained by drying the produced reaction solution in deionized water in an amount calculated to account for a solid concentration of 50%, neutralizing the resultant solution with an aqueous 1N sodium hydroxide solution, and drying the solution under a reduced pressure at 100°C under 15 mmHg for 5 hours.

The number average and the weight average molecular weights of the produced polymer for comparison (Comparison 1-2) and the cloud points of 0.5 wt.% ion deionized water and the synthetic sea water solution of the polymer are shown in Table 1.

### Referential Example

In a four-necked flask having an inner volume of 500 ml and provided with a stirrer, a condenser, a thermometer, and a nitrogen inlet tube, 75.00 g of N-isopropyl acrylamide (made by Kojin Co., Ltd,) and 425.00 g of deionized water were placed. Then, with the leading terminal of the nitrogen inlet tube submerged in the solution, nitrogen was bubbled through the solution at a flow volume of 0.5 liter/minute for 30 minutes to expel the dissolved oxygen from the system. Thereafter, the leading terminal of the nitrogen inlet tube was pulled up from the liquid level.

Then, the flask was immersed in a water bath at 31°C to maintain the temperature of the solution in the flask to 30°C. At the time that the temperature of the solution was stabilized at 30°C, 0.2 g of an aqueous 10% sodium persulfate solution was added in a stirred state as a polymerization initiator. After the elapse of 30 seconds thence, 0.2 g of an aqueous 10 wt. % 2,2-azobis(2,4-dimethyl valeronitrile) (made by Wako Pure Chemical Industries Co., Ltd. and sold under the product code of V-65") solution was added and after the further elapse of 30 seconds thence 0.2 g of an aqueous 1 wt. % L-ascorbic acid solution was added thereto.

The evolution of heat in consequence of a reaction of polymerization was observed to start after the elapse of about one second following the addition of the aqueous L-ascorbic acid solution. After a while, the system was opacified. With the further elapse of 8 minutes, the peak of polymerization (36°C) arrived. In the meanwhile, the reaction solution remained in the opacified state. Thereafter, the temperature of the water bath was elevated to 42°C and the reaction was continued at this temperature for 2 hours.

A polymer of referential example was obtained by placing part of the produced aqueous solution in a cup of aluminum and dried under a reduced pressure at 100°C under 15 mmHg for 5 hours.

The number average and the weight average molecular weights of the produced polymer of referential example and the cloud points of 0.5 wt.% ion deionized water and the synthetic sea water solution of the polymer are shown in Table 1.

**Table 1**

| Polymer No. | Number average molecular weight | Weight average molecular weight | Cloud point (°C) In deionized water/ in synthetic seawater |
|---|---|---|---|
| Polymer (1) | 1,400 | 4,500 | Higher than 92/ Higher than 92 |
| Polymer (2-1) | 1,000 | 1,800 | 39/36 |
| Polymer (2-2) | 1,000 | 1,800 | Higher than 92/66 |
| Polymer (3-1) | 2,200 | 4,200 | 62/44 |
| Polymer (3-2) | 2,200 | 4,200 | 76/46 |
| (Comparative polymer 1-1) | 1,200 | 2,500 | Lower than 30/ Lower than 30 |
| (Comparative polymer 1-2) | 1,200 | 2,500 | Lower than 30/ Lower than 30 |
| Polymer of referential example | 10,000 | 45,000 | 32/32 |

## Claims

1. A method for raising the cloud point of a polymer by copolymerizing (A) a monomer whose homopolymer possesses a cloud point and (B) other monomer, (B) said other monomer containing (b) a monomer possessing a dissociatable group and said copolymerization of (A) said monomer and (B) said other monomer component being carried out in the presence of a mercaptan and/or a sulfide possessing in the molecular unit thereof a dissociatable group having the same electric charge as said dissociatable group of (b) said monomer.

2. A method according to claim 1, wherein (A) said monomer is a N-substituted (meth)acrylamide represented by the following general formula (1) 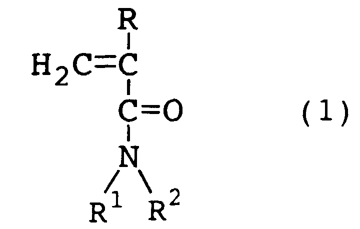 wherein R represents a hydrogen atom, an alkyl group of 1 - 4 carbon atoms, or a hydroxyalkyl group of 1 - 4 carbon atoms, R¹ and R² represent, either identically or not identically, a hydrogen atom or an organic residue of 1 - 8 carbon atoms, providing that they do not both represent a hydrogen atom and that R¹ and R² may be linked to each other directly or through the medium of at least one element selected from the group consisting of oxygen, nitrogen, and sulfur.

3. A method according to claim 1 or claim 2, wherein (b) said monomer possessing a dissociatable group is a monomer possessing a cationic dissociatable group and said mercaptan and/or said sulfide is at least one compound selected from the group consisting of cysteamine, cysteine, cystamine, cystine, and neutralized salts thereof.

4. A method according to claim 1 or claim 2, wherein (b) said monomer possessing a dissociatable group is a monomer possessing an anionic dissociatable group and said mercaptan and/or said sulfide is at least one compound selected from the group consisting of mercapto acetic acid, mercapto propionic acid, mercapto benzoic acid, mercapto succinic acid, mercapto ethane sulfonic acid, and neutralized salts thereof.

5. A method according to any of claims 1 - 4, wherein the molar ratio of [(A) said monomer and (B) said other monomer)] : (said mercaptan and/or said sulfide) is in the range of 1000 : 1 - 5 : 1.

6. A method according to any of claims 1 - 5, wherein the amount of (B) said other monomer to the total amount of (A) said monomer and (B) said other monomer is in the range of 1 - 50 mol%.

7. A method according to any of claims 1 - 6, wherein the proportion of (b) said monomer possessing a dissociatable group in (B) said other monomer is in the range of 10 - 100 mol%.

8. A method according to any of claims 1 - 7, wherein (b) said monomer possessing a dissociatable group is a cationic monomer selected from the group consisting of N,N-dialkyl amino alkyl (meth)acrylate, N,N-dialkyl amino alkyl (meth)acrylamide, and allyl amine, said mercaptan and/or said sulfide is a neutralized salt or a quaternized salt thereof, and said polymerization solvent is a water-containing solvent.

9. A method according to any of claims 1 - 7, wherein (b) said monomer possessing a dissociatable group is at least one member selected from the group consisting of maleic acid, fumaric acid, 2-acrylamide-2-methylpropane sulfonic acid, vinyl sulfonic acid, styrene sulfonic acid, allyl sulfonic acid, 3-hydroxy-3-allyloxy propane sulfonic acid, and maleic anhydride and said reaction is carried out in an aqueous or an organic solvent system.

10. A method according to any of claims 1 - 7, wherein (b) said monomer possessing a dissociatable group is (meth)acrylic acid and said mercaptan and/or said sulfide is added dropwise into the reaction system as split or continuously.

11. A polymer having a cloud point of not lower than 35°C in synthetic sea water, said polymer being obtained by a method set forth in any of claims 1 - 10.
